# EUROPÄISCHE PATENTSCHRIFT

(11) **EP 3 849 869 B1**
(45) Veröffentlichungstag und Bekanntmachung des Hinweises auf die Patenterteilung: **26.04.2023**
(21) Anmeldenummer: 19795128.8
(22) Anmeldetag: 17.10.2019
(51) Int. Cl.: B61C 7/04

(54) **ANORDNUNG ZUM ANTRIEB EINER LOKOMOTIVE MIT UNTERSCHIEDLICHEN ENERGIEBEREITSTELLUNGSSYSTEMEN**
ARRANGEMENT FOR DRIVING A LOCOMOTIVE HAVING VARIOUS ENERGY-PROVISION SYSTEMS
DISPOSITIF POUR ENTRAÎNER UNE LOCOMOTIVE COMPRENANT DIFFÉRENTS SYSTÈMES DE FOURNITURE D'ÉNERGIE

(30) Priorität: 04.12.2018 DE 102018220931
(43) Veröffentlichungstag der Anmeldung: 21.07.2021
(60) Teilanmeldung: 23157337.9
(73) Patentinhaber: Siemens Mobility GmbH, 81739 München (DE)
(72) Erfinder: LAUER, Stefan, 91052 Erlangen (DE); HÖSCHELER, Bernhard, 91058 Erlangen (DE)
(74) Vertreter: Siemens Patent Attorneys
(86) Internationale Anmeldenummer: PCT/EP2019/078248
(87) Internationale Veröffentlichungsnummer: WO 2020/114659

(56) Entgegenhaltungen:
- EP-A1- 1 186 497
- CN-A- 108 068 833
- DE-A1- 10 064 973
- DE-A1- 19 718 425
- DE-A1-102008 056 008
- DE-A1-102017 201 408
- US-A1- 2009 293 759
- US-A1- 2016 264 152
- US-B2- 9 975 435

## Beschreibung

Die Erfindung betrifft eine Anordnung zum Antrieb einer Lokomotive mit unterschiedlichen Energiebereitstellungssystemen.

Es sind Lokomotiven mit unterschiedlichen Energieversorgungssystemen bekannt, die jeweils unabhängig voneinander in der Lokomotive angeordnet sind und unabhängig voneinander betrieben werden.

Eine Zweikraftlokomotive verwendet beispielswiese als erstes Energieversorgungssystem einen Dieselmotor, der einen mit dem Dieselmotor gekoppelten elektrischen Generator antreibt. Eine dadurch erzeugte elektrische Leistung wird an elektrische Antriebsmotoren der Lokomotive übertragen, die dann die Lokomotive antreiben.

Parallel dazu ist auf der Lokomotive ein zweites, beispielsweise ein elektrisches, Energieversorgungssystem vorhanden. Die Lokomotive entnimmt über einen Stromabnehmer bzw. Pantographen elektrische Leistung aus einer Hochspannungs-Oberleitung und führt diese über einen Hauptschalter einem Transformator zu. Der Transformator wandelt die Hochspannung auf einen niedrigeren Mittelspannungswert herunter. Die Mittelspannung wird dann über einen sogenannten Vierquadrantensteller und einem diesem nachgeschalteten Wechselrichter wiederum elektrischen Antriebsmotoren der Lokomotive zugeführt, die dann die Lokomotive antreiben.

Derartige Lokomotiven sind flexibel einsetzbar, da sie als Schienenfahrzeuge mit Stromabnehmer und mit Dieselmotor auf elektrifizierten Strecken, auf nicht-elektrifizierten Strecken sowie in deren Übergangsbereichen nahezu unterbrechungsfrei fahren können.

Nachteilig ist hingegen, dass ein derartiges Schienenfahrzeug eine hohe Gesamtmasse und ein großes Volumen aufweist, bedingt durch die beiden parallel ausgebildeten Energieversorgungssysteme bzw. ihrer Komponenten.

Aufgrund von gegebenen Beschränkungen im Volumen des Schienenfahrzeugs und in dessen zulässigem Gesamtgewicht ist die Anzahl der zu nutzenden Energieerzeugungssysteme begrenzt. Im Allgemeinen sind zwei, maximal drei Energieversorgungssysteme pro Schienenfahrzeug bzw. pro Schienenfahrzeug-Zugverband vorgesehen.

Es ist auch bekannt, für eine zeitlich versetzte Nutzung von unterschiedlichen Energieversorgungssystemen eine erste Lokomotive, die beispielsweise über einen Dieselantrieb verfügt, und eine zweite Lokomotive, die beispielweise über einen Stromabnehmer sowie über Drehstrommotoren verfügt, miteinander zu koppeln und diese gekoppelten Lokomotiven als Zugverband einzusetzen. Je nach Streckenabschnitt wird dann eine der beiden Lokomotiven als Zugfahrzeug, beispielsweise von Waggons, etc., benutzt.

Aufgrund des Gewichts, des Fahrwiderstands und der Masse der jeweils nicht benötigten Lokomotive wird sowohl zusätzlich Leistung verbraucht als auch der Wartungsaufwand erhöht. Letztlich ist die Zugverband-Lösung zwar einfach realisierbar, verursacht jedoch große Kosten im Betrieb.

Aus Dokument DE 10 2017 201 408 A1 ist ein Eisenbahnzug bekannt, bei dem über einen Dieselmotor ein Betrieb des Eisenbahnzugs auf nicht elektrifizierten Strecken ermöglicht wird, während über eine Oberleitung ein Betrieb des Eisenbahnzugs auf elektrifizieren Strecken ermöglicht wird.

Aus Dokument US 9 975 435 B2 ist ein Zugverband mit einer dieselelektrischen Lokomotive bekannt. Die Lokomotive verwendet einen Wechselrichter dazu, um Strom für eine Heizung, für Betriebsmittel eines mit der Lokomotive verbundenen Wagensatzes, für den Betrieb einer (Lokomotiven-)Steuerung und für das Laden einer Starterbatterie der Lokomotive zur Verfügung zu stellen. Mit der Lokomotive ist ein Wagen gekoppelt. Dieser Wagen wird dazu verwendet, um einen geplanten Betrieb des Dieselmotors sowie der Steuerung sicherzustellen, wenn der Dieselmotor nicht benutzt wird. Der Wagen beinhaltet zu diesem Zweck einen gasbetriebenen Motor und Gasspeicher.

Aus Dokument EP 1 186 497 A1 ist ein Schienentriebfahrzeug mit darin angeordneten modularen Energieversorgungssystemen bekannt. Über die Modularität wird erreicht, dass beim Schienenfahrzeug eine aufwandsarme Anpassung bzw. Umrüstung der fahrzeugseitigen Energieversorgungsanlagen je nach Einsatzzweck ermöglicht wird.

Aus Dokument DE 100 64 973 A1 ist ein elektrisches Energieversorgungssystem eines Triebzuges bekannt. Das Triebfahrzeug weist lediglich Antriebseinheiten auf. Ein separates, mit dem Triebfahrzeug mechanisch und elektrisch gekoppeltes Fahrzeug speist Antriebsenergie in das Triebfahrzeug ein.

Aus US 2009 0293 759 A1 ist eine dieselelektrische Lokomotive bekannt, die mit einem separatem Antriebswagen gekoppelt ist.

Aus Dokument US 2016 0264 152 A1 ist eine Lokomotive bekannt, die mit einem Hilfsfahrzeug gekoppelt ist, wobei das Hilfsfahrzeug zum Empfangen von elektrischem Strom aus einer Oberleitung konfiguriert ist.

Aus Dokument CN 108 068 833 A ist ein Fahrzeugsatz mit einem Hybridantrieb bekannt.

Es ist die Aufgabe der vorliegenden Erfindung, eine verbesserte Lösung für eine Lokomotive anzugeben, die eine kostengünstige Nutzung unterschiedlicher Energieversorgungen ermöglicht.

Diese Aufgabe wird durch die Merkmale des Anspruchs 1 gelöst. Vorteilhafte Weiterbildungen sind in den abhängigen Ansprüchen angegeben.

Die Erfindung betrifft eine Anordnung zum Antrieb einer Lokomotive mit unterschiedlichen Energiebereitstellungssystemen, wobei die Lokomotive ein Hauptenergiebereitstellungssystem als Hauptsystem und ein Antriebssystem beinhaltet.

Vom Hauptsystem bereitgestellte Energie wird als Antriebsleistung dem Antriebssystem zugeführt und von diesem zum Bewegen der Lokomotive verwendet.

Ein Wagen beinhaltet zumindest ein weiteres Energiebereitstellungssystem als Nebensystem, wobei das Nebensystem zeitversetzt zum Hauptsystem dazu verwendet wird, Antriebsleistung dem Antriebssystem zuzuführen.

Komponenten, die sowohl vom Hauptsystem als auch von dem zumindest einen Nebensystemen nutzbar sind, sind lediglich einmal ausgeführt und werden sowohl vom Hauptsystem als auch vom zumindest einen Nebensystem gemeinsam genutzt.

Komponenten, die ausschließlich von dem zumindest einen Nebensystem nutzbar sind, sind auf dem Wagen angeordnet.

Die vom Energiebereitstellungssystem bereitgestellte bzw. umgeformte Energie wird als Antriebsleistung dem Antriebssystem zugeführt und von diesem dazu verwendet, die Lokomotive anzutreiben bzw. zu bewegen.

Dabei bildet ein erstes Energiebereitstellungssystem ein sogenanntes Hauptenergiebereitstellungssystem bzw. Hauptsystem.

Ein weiteres Energiebereitstellungssystem, das (parallel jedoch) zeitversetzt zum Hauptenergiebereitstellungssystem verwendet werden soll, bildet ein sogenanntes erstes Nebenenergiebereitstellungssystem bzw. erstes Nebensystem.

Weitere Energiebereitstellungssysteme, die wiederum parallel jedoch zeitversetzt zum Hauptenergiebereitstellungssystem und zum ersten Nebenenergiebereitstellungssystem verwendet werden sollen, bilden dann entsprechend ein zweites, drittes, etc., Nebenenergiebereitstellungssystem bzw. Nebensystem.

Die Komponenten des Hauptsystems sind vollständig auf der Lokomotive angeordnet. Damit wird ein autarker Betrieb der Lokomotive ermöglicht, da dann alle benötigten Komponenten (Energiebereitstellung bzw. Energieumformung und Antrieb) Bestandteil der Lokomotive sind.

Komponenten, die sowohl vom Hauptsystem als auch von den jeweiligen Nebensystemen nutzbar sind, werden lediglich einfach ausgeführt.

In einer bevorzugten Weiterbildung sind diese Komponenten, wie eingangs beschrieben, auf der Lokomotive selbst angeordnet.

In einer alternativen Ausgestaltung sind diese Komponenten zumindest teilweise auf dem nachfolgend beschriebenen Wagen angeordnet.

Komponenten, die nur von den jeweiligen Nebensystemen nutzbar sind, werden auf einem Wagen angeordnet.

Der Wagen ist bevorzugt unmittelbar mit der Lokomotive gekoppelt - beide bilden somit quasi ein Gespann.

Alternativ dazu kann die Lokomotive mit dem Wagen auch durch Leitungsverlängerungen, die durch weitere (Nutz-)Wagen hindurchführen, mittelbar verbunden sein.

Nachfolgend werden gängige Energiebereitstellungssysteme mit Komponenten sowie deren Aufteilung zwischen Lokomotive und Wagen angegeben, sofern es sich um Nebensysteme handelt: Wechselstrombetrieb:

### Anordnung auf dem Wagen:

- Stromabnehmer bzw. Pantograph
- Hauptschalter
- Transformator
- Vierquadrantensteller
- (Teil-) Zwischenkreis

### Anordnung auf der Lokomotive:

- (Teil-) Zwischenkreis
- Umrichter bzw. Frequenzumrichter für die Fahrmotoren
- Drehstrom-Asynchronmotor(-en) als Fahrmotor(-en)
- Kühlung für Fahrmotor(-en),
- Druckluftbremsanlage
- Kompressorsystem für Druckluftbremsanlage

### Gleichstrombetrieb:

### Anordnung auf dem Wagen:

- Stromabnehmer bzw. Pantograph
- Hauptschalter bzw. Schnellschalter
- Hochsetzsteller (optional, wandelt die Gleichspannung in die gewünschte Zwischenkreisspannung um)
- (Teil-) Zwischenkreis

### Anordnung auf der Lokomotive:

- (Teil-) Zwischenkreis
- Umrichter bzw. Frequenzumrichter für die Fahrmotoren
- Drehstrom-Asynchronmotor(-en) als Fahrmotor(-en)
- Kühlung für Fahrmotor(-en)
- Druckluftbremsanlage
- Kompressoranlage für Druckluftbremsanlage

### Dieselbetrieb:

### Anordnung auf dem Wagen:

- Dieselmotor zur Stromerzeugung
- Generator zur Erzeugung der benötigten elektrische Leistung bzw. Energie
- Umrichter zur Anpassung der Energie an den Zwischenkreis (Spannungsanpasung)
- (Teil-) Zwischenkreis

### Anordnung auf der Lokomotive:

- (Teil-) Zwischenkreis
- Umrichter bzw. Frequenzumrichter für die Fahrmotoren
- Drehstrom-Asynchronmotor(-en) als Fahrmotor(-en)
- Kühlung für Fahrmotoren,
- Druckluftbremsanlage
- Kompressorsystem für Druckluftbremsanlage

### Energiespeicherbetrieb:

### Anordnung auf dem Wagen:

- Energiespeicher z.B. Akkumulatoren, Wasserstoffspeicher mit Brennstoffzelle, Ultracaps, etc.
- eventuell erforderliche Energieumwandler auf elektrische Energie (z.B. bei Verwendung einer Brennstoffzelle)
- eventuell Umrichter zur Anpassung der Energiespeicherspannung in eine gewünschte Zwischenkreisspannung
- (Teil-) Zwischenkreis

### Anordnung auf der Lokomotive:

- (Teil-) Zwischenkreis
- Umrichter bzw. Frequenzumrichter für die Fahrmotoren
- Drehstrom-Asynchronmotor als Fahrmotor
- Kühlung für Fahrmotoren
- Druckluftbremsanlage
- Kompressoranlage für Druckluftbremsanlage

In einer beispielhaften Übersicht, jedoch nicht einschränkend, wird nachfolgend eine Konfiguration näher beschrieben, bei der eine Lokomotive sowohl eine elektrifizierte Strecke mit AC-Hochspannung als auch eine nicht-elektrifizierte Strecke befahren können soll.

In einer Ausgestaltung wird ein Dieselantrieb als Hauptsystem und ein Wechselstromantrieb als weiteres Nebensystem ausgewählt.

Die benötigten Komponenten werden bevorzugt und wie folgt zwischen der Lokomotive einerseits und dem Wagen andererseits aufgeteilt:
Auf der Lokomotive werden Komponenten des Hauptsystems, d.h. des Dieselantriebs, angeordnet. Diese Komponenten werden teilweise sowohl vom Hauptsystem als auch vom Nebensystem genutzt. Im Einzelnen sind dies:
- Dieselmotor
- Generator zur Erzeugung der benötigten elektrische Leistung
- (Teil-) Zwischenkreis
- Umrichter
- Drehstrom-Asynchronmotor(-en) als Fahrmotor(-en)
- Kühlung für Fahrmotoren,
- Druckluftbremsanlage
- Kompressorsystem für Druckluftbremsanlage

Auf dem Wagen werden alle verbleibenden Komponenten des Nebensystems angeordnet. Diese Komponenten werden nur vom Nebensystem genutzt. Dies sind:
- Stromabnehmer bzw. Pantograph
- Hauptschalter
- Transformator
- Vierquadrantensteller
- (Teil-) Zwischenkreis

Zwischen Hauptsystem und Nebensystem wird seitens der Lokomotive je nach Streckenabschnitt eine Auswahl getroffen. Die jeweils benötigten Komponenten werden über eine Auswahlschaltung miteinander verbunden, um die Lokomotive in Abhängigkeit des Streckenabschnitts zu betreiben.

Die Lokomotive beinhaltet somit alle benötigten Komponenten für einen autarken, Diesel-basierten Betrieb in einer vorgegebenen ersten Strecke.

In einer bevorzugten Weiterbildung sind etwaige (Teil-) Zwischenkreise beispielswiese über Trenner abtrennbar ausgeführt.

In einer bevorzugten Weiterbildung sind Anschlusspunkte für etwaige (Teil-) Zwischenkreise an einem Ende oder an beiden Enden der Lokomotive angeordnet, so dass ein Anschluss von außerhalb der Lokomotive ermöglicht wird.

Über entsprechend ausgestaltete elektrische Verbindungen der Teil-Zwischenkreise des Wagens und der Lokomotive wird ein betriebsfähiges Lokomotive-Wagen Gespann generiert. Dabei wird das Energiebereitstellungssystem des Wagens mit den Antriebskomponenten der Lokomotive verbunden.

Die Energiebereitstellung des Wagens erfolgt wahlweise über ein oder mehrere unterschiedliche, installierte Energiebereitstellungssysteme.

In einer bevorzugten Weiterbildung wird nicht benötigter, freier Platz bzw. Volumen des Wagens, dessen Größe im Allgemeinen von einem Betreiber vorgebeben wird, für andere Zwecke als für die der Energiebereitstellung verwendet. Dieser freie Platz kann beispielswiese zum Güter-, Post- oder zum Personentransport verwendet werden.

Darüber hinaus kann der freie Platz für zusätzliche Serviceangebote (z.B. Speisewagenbetrieb, VIP-Lounge, Arbeitsbereich für Geschäftsreisende) verwendet werden, um die Wirtschaftlichkeit des gesamten Gespanns, bestehend aus Lokomotive und Wagen, zusätzlich zu erhöhen.

Die vorliegende Erfindung ermöglicht über die räumliche Zuordnung der einzelnen Komponenten zur Lokomotive bzw. zum Wagen sowie durch die Komponenten-Mehrfachnutzung eine Einsparung an Kosten, Volumen und Gewicht.

Wartungs- und Betriebskosten werden im Vergleich zum bekannten Stand der Technik reduziert bzw. eingespart.

Das Gewicht des mitzuführenden Wagens liegt deutlich unter dem Gewicht einer bislang benötigten zweiten Lokomotive, so dass darüber hinaus Energiekosten gespart und eine Abnutzung der Infrastruktur (Gleise) reduziert wird.

Die Erfindung optimiert Kosten und Verwendungszweck durch einen modulare Aufbauweise.

Nachfolgend wird die vorliegende Erfindung beispielhaft anhand einer Zeichnung näher erläutert.

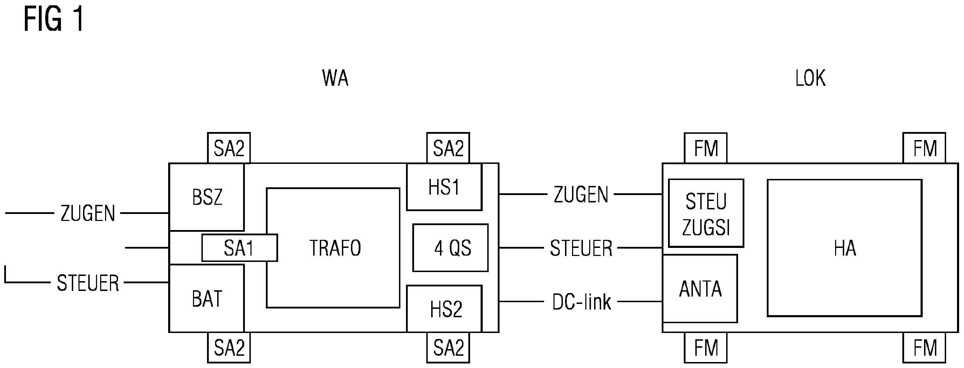

**FIG 1** zeigt ein bevorzugtes Ausführungsbeispiel der Erfindung mit einem Hauptenergiebereitstellungssystem (Hauptsystem) und mit insgesamt vier Nebenenergiebereitstellungssysteme (Nebensysteme).

Eine Lokomotive LOK trägt alle Komponenten eines Hauptsystems HA, bei dem es sich hier beispielhaft um einen Dieselantrieb handelt.

Die Lokomotive LOK wird mit Hilfe von Fahrmotoren FM angetrieben, die ebenfalls in der Lokomotive LOK integriert sind.

Weiterhin trägt die Lokomotive LOK Komponenten, die für ihren autarken Betrieb als Diesel-Lokomotive benötigt werden. Beispielhaft handelt es sich dabei um ein Zugsicherungssystem ZUGSI, um ein Steuerungssystem STEU und um eine Antriebsausrüstung ANTA.

Ein mit der Lokomotive LOK gekoppelter Wagen WA trägt Komponenten der vier Nebensysteme.

### Dabei handelt es sich um:

- ein erstes Nebensystem HS1, das als Wechselstrom-Energiebereitstellungssystem einer ersten Frequenz ausgebildet ist,
- ein zweites Nebensystem HS2, das als Gleichstrom-Energiebereitstellungssystem ausgebildet ist,
- ein drittes Nebensystem BSZ, dessen Energiebereitstellung unter Verwendung einer Brennstoffzelle erfolgt, und um
- ein viertes Nebensystem BAT, dessen Energiebereitstellung unter Verwendung einer Batterie erfolgt.

Das erste Nebensystem HS1 entnimmt mit Hilfe eines Stromabnehmers SA1 Leistung aus einem Streckennetz. Beim Stromabnehmer SA1 handelt es sich beispielsweise um einen auf dem Dach des Wagens WA angeordneten, aus- bzw. einfahrbaren Stromabnehmer oder Pantographen.

Das zweite Nebensystem HS2 entnimmt mit Hilfe eines Stromabnehmers SA2 Leistung aus einem Streckennetz. Beim Stromabnehmer SA2, der hier vierfach ausgeführt ist, handelt es sich beispielsweise um einen seitlichen, aus- bzw. einklappbaren Stromabnehmer.

Die beiden Nebensysteme HS1 und HS2 nutzen gemeinsam einen Transformator bzw. eine Drossel TRAFO, der ebenfalls einen Teil des Wagens WA bildet.

Für die Nebensysteme HS1 und HS2 ist außerdem ein Steller 4QS vorgesehen, der ebenfalls gemeinsam genutzt wird und der einen weiteren Teil des Wagens WA bildet.

Dabei ist der Steller 4QS als Vierquadrantensteller für das erste Nebensystem HS1 ausgebildet. Der Steller 4QS ist als Hoch-/Tiefsetzsteller für das zweite Nebensystem HS2 ausgebildet.

Erzeugte Zugenergie bzw. Leistung der vier Nebensysteme HS1 bis HS4 gelangt vom Wagen WA an die Lokomotive LOK über eine Leitung DC-link.

Eine weitere Leitung STEUER übermittelt notwendige Steuersignale beidseitig zwischen Wagen WA und Lokomotive LOK.

Der Wagen WA ist lösbar oder fest-gekuppelt mit der Lokomotive LOK verbunden.

Mit Hilfe der Leitung DC-Link kann die Lokomotive LOK vom Wagen WA her mit DC-Spannung versorgt werden.

Dazu erforderliche Komponenten, wie z. B. Stromrichter, Transformator, Glättungseinrichtungen, etc., sind auf dem Wagen WA angeordnet, um die zum Antrieb benötigte Energie zu erzeugen. Alternativ dazu sind sie auf der Lokomotive LOK angebracht.

Die benötigte Energie kann auch zur Versorgung eines Bordnetzes der Lokomotive LOK genutzt werden.

## Patentansprüche

1. Anordnung zum Antrieb einer Lokomotive mit unterschiedlichen Energiebereitstellungssystemen,
- mit einer Lokomotive, die ein Hauptenergiebereitstellungssystem als Hauptsystem und ein Antriebssystem beinhaltet, wobei vom Hauptsystem bereitgestellte Energie als Antriebsleistung dem Antriebssystem zugeführt und von diesem zum Bewegen der Lokomotive verwendet wird,
- mit einem Wagen, der zumindest ein weiteres Energiebereitstellungssystem als Nebensystem beinhaltet, wobei das Nebensystem zeitversetzt zum Hauptsystem dazu verwendet wird, Antriebsleistung dem Antriebssystem zuzuführen,
- bei der benötigte Komponenten des Hauptsystems vollständig auf der Lokomotive angeordnet sind, so dass ein autarker Betrieb der Lokomotive ermöglicht wird,
- bei der Komponenten, die sowohl vom Hauptsystem als auch von dem zumindest einen Nebensystemen gemeinsam genutzt werden, lediglich einmal ausgeführt sind,
- bei der Komponenten, die nur von dem zumindest einen Nebensystem nutzbar sind, auf dem Wagen angeordnet sind,
- bei der ein Energiespeicherbetriebbasiertes Nebensystem ausgebildet ist und der Wagen als Komponenten des Nebensystems aufweist:
- einen Energiespeicher,
- einen Umrichter zur Anpassung der gespeicherten Energie in eine gewünschte Zwischenkreisspannung, und
- einen Teil-Zwischenkreis aufweist,
- bei der ein Dieselantrieb als Hauptsystem ausgebildet ist und die Lokomotive folgende Komponenten für einen autarken, Diesel-basierten Betrieb in einer vorgegebenen ersten Strecke aufweist:
- einen Dieselmotor,
- einen Generator zur Erzeugung einer benötigten elektrischen Leistung,
- einen Teil-Zwischenkreis,
- einen Umrichter,
- einen Drehstrom-Asynchronmotor als Fahrmotor,
- eine Kühlung für den Fahrmotor,
- eine Druckluftbremsanlage und
- ein Kompressorsystem für die Druckluftbremsanlage,
- wobei zwischen Hauptsystem und Nebensystem seitens der Lokomotive je nach Streckenabschnitt eine Auswahl getroffen wird, wobei jeweils benötigte Komponenten über eine Auswahlschaltung miteinander verbunden werden, um die Lokomotive in Abhängigkeit des Streckenabschnitts zu betreiben,
- bei der über elektrische Verbindungen der Teil-Zwischenkreise des Wagens und der Lokomotive ein betriebsfähiges Lokomotive-Wagen Gespann generiert ist, indem das Energiebereitstellungssystem des Wagens mit den Antriebskomponenten der Lokomotive verbunden wird.

2. Anordnung nach Anspruch 1, bei der weitere Energiebereitstellungssysteme als Nebensysteme auf dem Wagen angeordnet sind.

3. Anordnung nach einem der vorhergehenden Ansprüche,
- bei der der Wagen unmittelbar mit der Lokomotive gekoppelt ist, oder
- bei der die Lokomotive mit dem Wagen durch Leitungsverlängerungen, die durch weitere Wagen führen, mittelbar verbunden ist.

4. Anordnung nach einem der vorhergehenden Ansprüche, bei der bei einem Wechselstrom-basierten Nebensystem
- der Wagen als Komponenten des Nebensystems einen Stromabnehmer, einen Hauptschalter, einen Transformator und einen Vierquadrantensteller aufweist,
- die Lokomotive als Komponenten des Hauptsystems einen Umrichter oder Frequenzumrichter für die Fahrmotoren aufweist,
- der Zwischenkreis, der zwischen dem Vierquadrantensteller und dem Umrichter angeordnet ist, zumindest teilweise auf dem Wagen oder auf der Lokomotive angeordnet ist.

5. Anordnung nach einem der vorhergehenden Ansprüche, bei der bei einem Gleichstrom-basierten Nebensystem
- der Wagen als Komponenten des Nebensystems einen Stromabnehmer, einen Hauptschalter und optional einen Hochsetzsteller aufweist,
- die Lokomotive als Komponenten des Hauptsystems einen Umrichter oder Frequenzumrichter für die Fahrmotoren aufweist,
- der Zwischenkreis, der zwischen dem Hauptschalter bzw. dem Hochsetzsteller und dem Fahrmotor-Umrichter angeordnet ist, zumindest teilweise auf dem Wagen oder auf der Lokomotive angeordnet ist.

6. Anordnung nach einem der vorhergehenden Ansprüche, bei der bei einem auf einem Dieselbetrieb-basierten Nebensystem
- der Wagen als Komponenten des Nebensystems einen Dieselmotor, einen mit dem Dieselmotor verbundenen Generator zur Erzeugung der benötigten elektrischen Leistung bzw. Energie und optional einen Umrichter zur Anpassung der elektrischen Leistung bzw. Energie an einen Zwischenkreis aufweist,
- die Lokomotive als Komponenten des Hauptsystems einen Umrichter oder einen Frequenzumrichter für die Fahrmotoren aufweist,
- der Zwischenkreis, der zwischen dem Generator bzw. dem wahlweisen Umrichter und dem Fahrmotor-Umrichter angeordnet ist, zumindest teilweise auf dem Wagen oder auf der Lokomotive angeordnet ist.

7. Anordnung nach einem der vorhergehenden Ansprüche, bei der bei dem Energiespeicherbetrieb-basierten Nebensystem
- der Wagen als Energiespeicher einen Akkumulator, einen Wasserstoffspeicher mit Brennstoffzelle und/oder Ultracaps aufweist,
- der Wagen optional einen Energieumwandler aufweist, der ihm aus dem Energiespeicher zugeführte Energie in elektrische Energie umwandelt,
- die Lokomotive als Komponenten des Hauptsystems einen Umrichter oder einen Frequenzumrichter für die Fahrmotoren aufweist,
- der Zwischenkreis, der zwischen dem Energiespeicher und dem Fahrmotor-Umrichter angeordnet ist, zumindest teilweise auf dem Wagen oder auf der Lokomotive angeordnet ist.

8. Anordnung nach einem der vorhergehenden Ansprüche,
- bei der ein Wechselstromantrieb als Nebensystem ausgebildet ist,
- bei der der Wagen als Komponenten des Nebensystems einen Stromabnehmer, einen Hauptschalter, einen Transformator und einen Vierquadrantensteller aufweist,
- bei der der Zwischenkreis, der zwischen dem Umrichter und dem Vierquadrantensteller angeordnet ist, zumindest teilweise auf dem Wagen oder auf der Lokomotive angeordnet ist.

9. Anordnung nach einem der vorhergehenden Ansprüche, bei der die Teil-Zwischenkreise über einen Trenner abtrennbar ausgeführt sind.

10. Anordnung nach einem der vorhergehenden Ansprüche, bei der Anschlusspunkte für die Teil-Zwischenkreise an einem Ende oder an beiden Enden der Lokomotive angeordnet sind, so dass ein Anschluss von außerhalb der Lokomotive ermöglicht wird.

11. Anordnung nach einem der vorhergehenden Ansprüche, bei der nicht benötigtes, freies Volumen des Wagens für eine Verwendung zum Güter-, Post- oder Personentransport oder als Servicebereich ausgestaltet ist.

## Claims

1. Arrangement for driving a locomotive having various energy-provision systems,
- with a locomotive which includes a main energy-provision system as the main system, and a drive system, wherein energy provided by the main system is fed as drive power to the drive system and used by the latter to move the locomotive,
- with a carriage which includes at least one further energy-provision system as an ancillary system, wherein the ancillary system is used to feed drive power to the drive system at different times from the main system,
- in which required components of the main system are arranged completely on the locomotive such that autonomous operation of the locomotive is made possible,
- in which components which are jointly used both by the main system and by the at least one ancillary system are implemented only once,
- in which components which can be used only by the at least one ancillary system are arranged on the carriage,
- in which an ancillary system based on an energy storage mode is designed and, as components of the ancillary system, the carriage has:
- an energy store,
- an inverter for adapting the stored energy to a desired intermediate circuit voltage, and
- a partial intermediate circuit,
- in which a diesel drive is designed as the main system and the locomotive has the following components for autonomous diesel-based operation in a predefined first route:
- a diesel engine,
- a generator for generating a required electric power,
- a partial intermediate circuit,
- an inverter,
- a three-phase asynchronous motor as traction motor,
- a cooling system for the traction motor,
- a compressed-air braking system, and
- a compressor system for the compressed-air braking system,
- wherein, for each section of the route, a choice is made by the locomotive between the main system and the ancillary system, wherein respectively required components are combined with one another via a selection circuit in order to operate the locomotive depending on the route section,
- in which an operationally capable locomotive-carriage unit is generated via electrical connections of the partial intermediate circuits of the carriage and of the locomotive, by the energy-provision system of the carriage being connected to the drive components of the locomotive.

2. Arrangement according to Claim 1, in which further energy-provision systems are arranged on the carriage as ancillary systems.

3. Arrangement according to one of the preceding claims,
- in which the carriage is coupled directly to the locomotive, or
- in which the locomotive is connected indirectly to the carriage by extended cables which lead through further carriages.

4. Arrangement according to one of the preceding claims, in which, in an AC-based ancillary system,
- the carriage has a current collector, a main circuit breaker, a transformer, and an H-bridge as components of the ancillary system,
- the locomotive has an inverter or frequency converter for the traction motors as components of the main system,
- the intermediate circuit which is arranged between the H-bridge and the inverter is arranged at least partially on the carriage or on the locomotive.

5. Arrangement according to one of the preceding claims, in which, in a DC-based ancillary system,
- the carriage has a current collector, a main circuit breaker, and optionally a boost converter as components of the ancillary system,
- the locomotive has an inverter or frequency converter for the traction motors as components of the main system,
- the intermediate circuit which is arranged between the main circuit breaker or H-bridge and the traction motor inverter is arranged at least partially on the carriage or on the locomotive.

6. Arrangement according to one of the preceding claims, in which, in an ancillary system based on a diesel mode,
- the carriage has, as components of the ancillary system, a diesel engine, a generator connected to the diesel engine for generating the required electric power or energy, and optionally an inverter for adapting the electric power or energy to an intermediate circuit,
- the locomotive has an inverter or a frequency converter for the traction motors as components of the main system,
- the intermediate circuit which is arranged between the generator or the optional inverter and the traction motor inverter is arranged at least partially on the carriage or on the locomotive.

7. Arrangement according to one of the preceding claims, in which, in the ancillary system based on an energy storage mode,
- the carriage has a storage battery, a hydrogen store with a fuel cell, and/or ultracaps as an energy store,
- the carriage optionally has an energy converter which converts energy fed to it from the energy store into electrical energy,
- the locomotive has an inverter or a frequency converter for the traction motors as components of the main system,
- the intermediate circuit which is arranged between the energy store and the traction motor inverter is arranged at least partially on the carriage or on the locomotive.

8. Arrangement according to one of the preceding claims,
- in which an AC drive is designed as an ancillary system,
- in which the carriage has a current collector, a main circuit breaker, a transformer, and an H-bridge as components of the ancillary system,
- in which the intermediate circuit which is arranged between the inverter and the H-bridge is arranged at least partially on the carriage or on the locomotive.

9. Arrangement according to one of the preceding claims, in which the partial intermediate circuits are designed such that they can be isolated via a disconnector.

10. Arrangement according to one of the preceding claims, in which connection points for the partial intermediate circuits are arranged at one end or at both ends of the locomotive, so that connection from outside the locomotive is made possible.

11. Arrangement according to one of the preceding claims, in which free volume within the carriage which is not needed is configured for use for transporting goods, mail or passengers, or as a service area.

## Revendications

1. Dispositif de propulsion d'une locomotive avec différents systèmes d'alimentation en énergie,
- avec une locomotive qui comprend un système principal d'alimentation en énergie comme système principal et un système de propulsion, de l'énergie préparée par le système principal étant acheminée au système de propulsion en tant que puissance motrice et étant utilisée par celui-ci pour le mouvement de la locomotive,
- avec un wagon qui comprend au moins un autre système d'alimentation en énergie comme système auxiliaire, le système auxiliaire étant utilisé en décalage temporel par rapport au système principal pour acheminer de la puissance motrice au système de propulsion,
- dans lequel des composants nécessaires du système principal sont disposés entièrement sur la locomotive, pour rendre possible une propulsion autosuffisante de la locomotive,
- dans lequel des composants utilisés en commun à la fois par le système principal et aussi par l'au moins un système auxiliaire ne sont réalisés qu'une seule fois,
- dans lequel des composants qui ne sont utilisables que par l'au moins un système auxiliaire sont disposés sur le wagon,
- dans lequel un système auxiliaire basé sur un mode d'accumulation d'énergie est constitué et dans lequel le wagon, en tant que système auxiliaire, présente :
- un accumulateur d'énergie,
- un onduleur pour adapter l'énergie accumulée à la tension de circuit intermédiaire désirée, et
- présente un circuit intermédiaire partiel,
- dans lequel une propulsion Diesel est constituée comme système principal et dans lequel la locomotive présente les composants suivants pour une propulsion autosuffisante fondée sur un Diesel sur un premier trajet prédéterminé :
- un moteur Diesel,
- un générateur pour générer la puissance électrique nécessaire,
- un circuit intermédiaire partiel,
- un onduleur,
- un moteur asynchrone sur courant triphasé comme moteur de traction,
- un refroidissement pour le moteur de traction,
- un dispositif de freinage à air comprimé, et
- un système de compresseur pour le dispositif de freinage à air comprimé,
- une sélection étant effectuée entre le système principal et le système auxiliaire de la part de la locomotive en fonction de la section de trajet, où des composants nécessaires respectivement sont liés entre eux par une commutation pour propulser la locomotive en fonction de la section de trajet,
- dans lequel un attelage opérationnel entre la locomotive et le wagon est généré par des connexions électriques des circuits intermédiaires partiels du wagon et de la locomotive, où le système d'alimentation en énergie du wagon est relié aux composants de propulsion de la locomotive.

2. Dispositif selon la revendication 1, dans lequel d'autres systèmes d'alimentation en énergie sont disposés en tant que systèmes auxiliaires sur le wagon.

3. Dispositif selon l'une quelconque des revendications précédentes,
- dans lequel le wagon est couplé directement à la locomotive, ou
- dans lequel la locomotive est liée directement au wagon par des lignes de prolongement qui courent à travers d'autres wagons.

4. Dispositif selon l'une quelconque des revendications précédentes, dans lequel dans un système auxiliaire basé sur du courant alternatif,
- le wagon, en tant que composant du système auxiliaire, présente un pantographe, un commutateur principal, un transformateur et un convertisseur à quatre cadrans,
- la locomotive, en tant que composant du système principal, présente un onduleur ou un convertisseur de fréquence pour les moteurs de traction,
- le circuit intermédiaire, qui est disposé entre le convertisseur à quatre cadrans et l'onduleur, est disposé au moins en partie sur le wagon ou sur la locomotive.

5. Dispositif selon l'une quelconque des revendications précédentes, dans lequel dans un système auxiliaire basé sur du courant continu,
- le wagon, en tant que composant du système auxiliaire, présente un pantographe, un commutateur principal et idéalement un convertisseur élévateur,
- la locomotive, en tant que composant du système principal, présente un onduleur ou un convertisseur de fréquence pour les moteurs de traction,
- le circuit intermédiaire, qui est disposé entre le commutateur principal resp. le convertisseur élévateur et l'onduleur du moteur de traction, est disposé au moins en partie sur le wagon ou sur la locomotive.

6. Dispositif selon l'une quelconque des revendications précédentes, dans lequel dans un système auxiliaire basé sur une propulsion Diesel,
- le wagon, en tant que composant du système auxiliaire d'un moteur Diesel, présente un générateur lié au moteur Diesel pour générer la puissance électrique ou resp. l'énergie nécessaire, et facultativement un onduleur pour adapter la puissance électrique ou resp. l'énergie à un circuit intermédiaire,
- la locomotive, en tant que composant du système principal, présente un onduleur ou un convertisseur de fréquence pour les moteurs de traction,
- le circuit intermédiaire, qui est disposé entre le générateur ou resp. l'onduleur au choix et l'onduleur du moteur de traction, est disposé au moins en partie sur le wagon ou sur la locomotive.

7. Dispositif selon l'une quelconque des revendications précédentes, dans lequel dans un système auxiliaire basé sur un accumulateur d'énergie,
- le wagon, en tant qu'accumulateur d'énergie, présente un accumulateur, un stockage d'hydrogène avec une pile à combustible et/ou des ultracaps,
- le wagon présente facultativement un convertisseur d'énergie qui lui convertit l'énergie acheminée depuis l'accumulateur d'énergie en énergie électrique,
- la locomotive, en tant que composant du système principal, présente un onduleur ou un convertisseur de fréquence pour les moteurs de traction,
- le circuit intermédiaire, qui est disposé entre l'accumulateur d'énergie et l'onduleur du moteur de traction, est disposé au moins en partie sur le wagon ou sur la locomotive.

8. Dispositif selon l'une quelconque des revendications précédentes,
- dans lequel est constituée une propulsion sur courant alternatif en tant que système auxiliaire,
- dans lequel le wagon, en tant que composant du système auxiliaire, présente un pantographe, un commutateur principal, un transformateur et un convertisseur à quatre cadrans,
- dans lequel le circuit intermédiaire, qui est disposé entre l'onduleur et le convertisseur à quatre cadrans, est disposé au moins en partie sur le wagon ou sur la locomotive.

9. Dispositif selon l'une quelconque des revendications précédentes, dans lequel les circuits intermédiaires partiels sont conçus séparables grâce à un séparateur.

10. Dispositif selon l'une quelconque des revendications précédentes, dans lequel des points de raccordement pour les circuits intermédiaires partiels sont disposés à une extrémité ou aux deux extrémités de la locomotive, pour permettre un raccordement de l'extérieur de la locomotive.

11. Dispositif selon l'une quelconque des revendications précédentes, dans lequel un volume libre non nécessaire du wagon est conçu pour le transport de marchandises, de courrier, de personnes ou comme zone de service.
